# EUROPEAN PATENT SPECIFICATION

(11) **EP 2 804 682 B1**
(45) Date of publication and mention of the grant of the patent: **23.11.2016**
(21) Application number: 12701446.2
(22) Date of filing: 19.01.2012
(51) Int. Cl.: C02F 1/00, C02F 103/08, C02F 1/14, B01D 1/00, B01D 3/00, B01D 5/00, E03B 3/04, B01D 1/14

(54) **DESALINATION STATION USING A HEAT PUMP AND PHOTOVOLTAIC ENERGY**
ENTSALZUNGSSTATION MIT EINER WÄRMEPUMPE UND PHOTOVOLTAISCHER ENERGIE
STATION DE DESSALEMENT UTILISANT UNE POMPE À CHALEUR ET DE L'ÉNERGIE PHOTOVOLTAÏQUE

(43) Date of publication of application: 26.11.2014
(73) Proprietor: SMART AQUAE SRL, 33010 Tavagnacco (UD) (IT)
(72) Inventor: Sbuelz, Anes, 33050 Fiumicello (UD) (IT)
(74) Representative: Mitola, Marco
(86) International application number: PCT/EP2012/000234
(87) International publication number: WO 2013/107469

(56) References cited:
- WO-A2-2011/018242
- AU-A- 6 852 881
- DE-A1- 3 122 312
- GB-A- 2 186 564
- US-A- 3 699 006

## Description

### Technical field

The present invention relates to a desalination station according to the characteristics of the pre-characterizing part of claim 1.

### Definitions

In the present description and in the appended claims the following terms must be interpreted according to the definitions given in the following.

With the term "desalination" or "desalinization" a process is generically indicated, which is used to reduce the amount of solids dissolved in water.

With the terms "solids dissolved in water" one should not understand only dissolved salt, but also minerals and/or chemicals contained in not drinking water.

The term "saline water" or "salty water" must be understood as including water comprising medium or high concentrations of salts or anyway of solids dissolved in water.

### Prior art

In the field of execution of desalination systems or plants to obtain desalinated water for drinking use various processes are known, each of which is used in different fields according to the concentrations of salts present:
- ion exchange desalination in which the water is made to pass between two electrodes maintained at a low potential difference;
- electrodialysis desalination in which the salts are separated from the water by ionic migration through membranes inserted in an electric field;
- reverse osmosis desalination in which the water is separated from the salts by filtering through membranes;
- distillation desalination in which the seawater is heated until producing vapour that condenses and is collected.

DE 102004033409 describes an automatic water desalination plant, based on evaporation using a solar collector and a heat pump or Peltier element, using counter current principle for partial energy recovery.

WO2004076359 describes a water desalination method comprising the steps of: supplying thermal energy to salt water in a vaporisation zone, removing water vapour from the vaporisation zone to a condensation zone, and at least partly condensing the water vapour into fresh water in the condensation zone. A heat pump is used to transfer at least part of the heat extracted from the water vapour in the condensation zone to the salt water in the vaporisation zone. WO200407635 also describes an apparatus for use in water desalination comprising: a vaporization chamber for holding seawater, and having a water vapour outlet connected via a water vapour transfer conduit to a condensation chamber for condensation of air humidity into fresh water. The vaporization chamber has at least one heater arranged to supply thermal energy to the salt water in the vaporization chamber. A heat pump is used to transfer at least part of the heat from the water vapour in the condensation chamber to the heater.

CN201059804Y relates to a combined device of power generation and seawater desalination by means of a photovoltaic system. The device uses the electric power and the thermal energy generated by the generation of energy through the photovoltaic system and a heat pump that is the heat source supplied to a container of the vapour at a low temperature and seawater desalination device; at the same time, a power supply system is used, which uses a renewable energy source to carry out the desalination of seawater.

DE3122312 discloses an apparatus for desalinating sea water which is provided with a space in which the sea water is atomised and evaporated and the steam passes to a cold surface on which it condenses.

WO2011018242 discloses a method for desalinating sea water, wherein steam formed in the evaporation chamber is fed to a condenser, wherein the condenser is supplied via a suction line with sea water or salt water, wherein distillate condensed on the condensing coils of the condenser is collected and stored, wherein the air flow is heated in the heating station using regenerative energy or residual energy from an operational process.

### Problems of the prior art

Each of the systems of the prior art presents different problems that limit their applicability.

For example, as for ion exchange desalination, the system must be periodically cleaned from the salts making water pass in the opposite direction and, furthermore, it is not applicable in case of high salt concentrations.

As for electro-dialysis desalination, the desalination costs are very high and require
much energy insomuch as the electrodialysis desalination plants are generally operated at night when the electrical fares are lower and, moreover, this method is not applicable in case of high salt concentrations.

As for reverse osmosis desalination, problems of high cost are linked both to the cost of the membranes used and to the cost of the electric power necessary for the activation of the high pressure pumps insomuch as the electrodialysis desalination plants are generally operated at night when electric fares are lower. If one does not use expensive membranes with a high resistance to pressure this process is not usable for high salt concentrations. Moreover, the water must be previously filtered to eliminate particles that might damage the membrane itself, besides requiring the addition of chemical additives to control pH and minimize the deposit of salt on the surface of the membrane.

As for distillation desalination, it is cheaper than the previous ones, but it requires the presence of energy sources for heating all the same, insomuch as its use is generally limited to the cases in which either hot water is already present as a waste product of other processes or when low cost energy is available or in the cases in which energy and desalinated water can be produced simultaneously in a cogeneration process. The large-scale distillation units use a process known as Multistage distillation flash, which requires very expensive and bulky equipment for the need to have a series of evaporation chambers, each at a pressure and temperature lower than the previous one.

### Aim of the invention

The aim of the present invention is to provide a desalination station or plant that exploits in an efficient way the available energy resources and that is able to work autonomously with respect to external energy sources coming from power networks, gas, hydrocarbons or other fuels.

### Concept of the invention

The aim is achieved with the characteristics of the main claim. The sub-claims represent advantageous solutions.

### Advantageous effects of the invention

The solution in accordance with the present invention, by the considerable creative contribution the effect of which constitutes an immediate and not negligible technical progress, presents various advantages.

A very important advantage is that the desalination station or plant according to the present invention can work autonomously with respect to external energy sources coming from power networks, ensuring its applicability also in case of isolated areas, for example areas not served by power networks or in the absence of external energy sources such as electric generators powered by fuel, the desalination plant according to the present invention being anyway able to work autonomously with respect to external energy sources coming from power networks, gas, hydrocarbons or other fuels.

A further advantage of the present invention is an efficient exploitation of the available energy minimizing energy waste.

A further advantage of the present invention is that it is particularly compact, resulting of easy installation.

A further advantage of the present invention is that it finds advantageous application in an installation made directly at sea, avoiding a waste of ground.

A further advantage of the present invention is that it can also be made in relatively small scale to meet the needs of small residential centres, for example small isolated residential centres.

### Description of the drawings

In the following an embodiment is described with reference to the enclosed drawings to be considered as a non-limiting example of the present invention in which:
Fig. 1 represents a schematic side view of the desalination station made according to the present invention.
Fig. 2 represents a schematic plan view of the desalination station made according to the present invention.
Fig. 3 represents a schematic front view of the desalination station made according to the present invention.
Fig. 4 represents a schematic sectional view of the structure of the wall of the desalination station made according to the present invention.
Fig. 5 represents a schematic side view of the container of the desalination station made according to the present invention showing the components inside the container.
Fig. 6 represents a schematic side view of the casing of the desalination station made according to the present invention showing the components inside the casing.
Fig. 7 represents a schematic view of the desalination station made according to the present invention showing the connection diagram of the components.
Fig. 8 represents a schematic view of the desalination station made according to the present invention showing the schematic diagram of the desalination station.
Fig. 9 represents a schematic view of the desalination station made according to the present invention in an illustrative installation solution.
Fig. 10 represents a schematic view of the desalination station made according to the present invention in an illustrative installation solution.

### Description of the invention

The invention aims at reproducing the cycle of water that develops in nature making the most of solar energy only, providing a distillation desalination station or plant in which the seawater is heated until producing vapour that condenses and is collected, all this exploiting only solar energy in a high energetic efficiency station or plant.

The salient steps of the water desalination process by distillation are the evaporation and the condensation of the humidity with the consequent recovery of the condensed water with a low concentration of dissolved solids at a suitable temperature and pressure gradient.

The present invention finds advantageous application in the case of the treatment of salty or brackish waters, such as seawater, even if the invention is applicable in an advantageous way also for low concentrations of dissolved solids.

The solution according to the present invention allows to speed up the evaporation of salty or brackish water and the following condensation of damp air minimizing the dispersion of the energies necessary for the realization of the cycle.

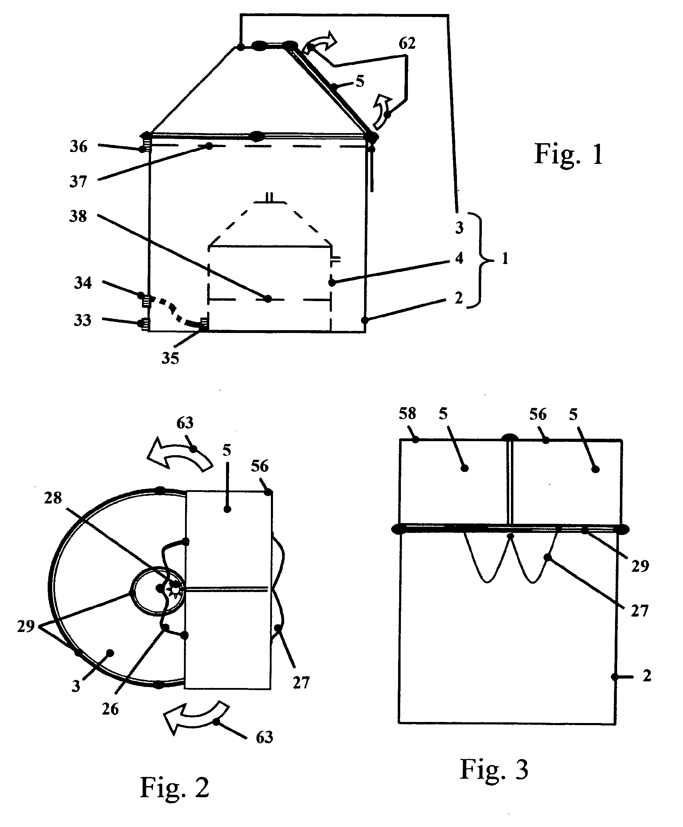

The desalination station (1) according to the present invention (Figures 1, 2, 3) consists of a casing (2) into which salty or brackish water is introduced and closed by a hood (3) inside which is the container (4) in which the condensation of fresh water occurs.

The energy necessary to obtain evaporation is provided by solar radiation using both the phenomenon of production of energy by photovoltaic principle and the thermal phenomenon to heat the water.

The current technologies allow to combine the photovoltaic solar panel (5) with a light metal structural section (56) able to convey a cooling liquid inside it. In the desalination station (1) according to the present invention this solution offers various advantages. First of all the presence of a particularly light supporting structure allows to carry out a movement of the solar panels (5) suitable to obtain at any time of the day the best exposure possible with respect to the position of the sun. Moreover, the cooling of the photovoltaic solar panel (5) allows to maintain a high photovoltaic efficiency of the cells. Finally, the use of a cooling liquid that removes the heat accumulated on the photovoltaic solar panel (5) also allows to transfer the heat developed by solar radiation to a second environment, in this case to the salty or brackish water to obtain its evaporation in order to carry out the distillation process.

As known, the process of evaporation is regulated by temperature and pressure conditions, which determine the necessary evaporation energy: the higher the temperature, the greater the evaporation and the lower the pressure the greater the evaporation.

The desalination station (1) according to the present invention exploits all the physical principles present in the cycles of the various components and in the natural cycles in order to obtain the greatest efficiency possible:
- the heat obtained by cooling the photovoltaic solar panels (5) to improve their efficiency is transferred to the brackish or salty water to increase its temperature;
- the heat obtained by cooling the water vapour by condensation is transferred to the brackish or salty water to increase its temperature;
- the air taken from the casing containing the brackish or salty water to create a depression favouring the process of evaporation is used to increase the pressure inside the condensation container to favour the condensation process itself;
- tides are exploited to obtain the replacement of the brackish or salty water.

With these solutions the energy necessary to carry out the process is reduced, making the desalination station (1) according to the present invention particularly efficient insomuch as to make it autonomous from the energy point of view and allowing its installation also in areas where other energy sources are not available. The need for other energy sources is often a big obstacle to the spread of the desalination systems.

In the embodiment described (Figures 1, 2, 3) the desalination station (1) according to the present invention consists of a cylindrical casing (2) into which the salty or brackish water is introduced through a feeding connection (33) and closed by a frusto-conical hood (3) inside which is the container (4) in which the condensation of the fresh water occurs. An internal drawing connection (35) present on the container (4) is connected to a corresponding external drawing connection (34) for drawing the desalinated water. Advantageously the hood (3) is a separate body with respect to the casing (2) and it can be removed for maintenance or inspection operations. For example the hood (3) can be hinged to allow its opening by rotation on the horizontal plane or by lifting an end, or, still, it can be intended to be lifted vertically by means of the use of jacks, etc. As an alternative, the hood (3) can also be made in two parts, one of which is a fixed part and the other is a movable part the opening of which allows access into the casing (2).

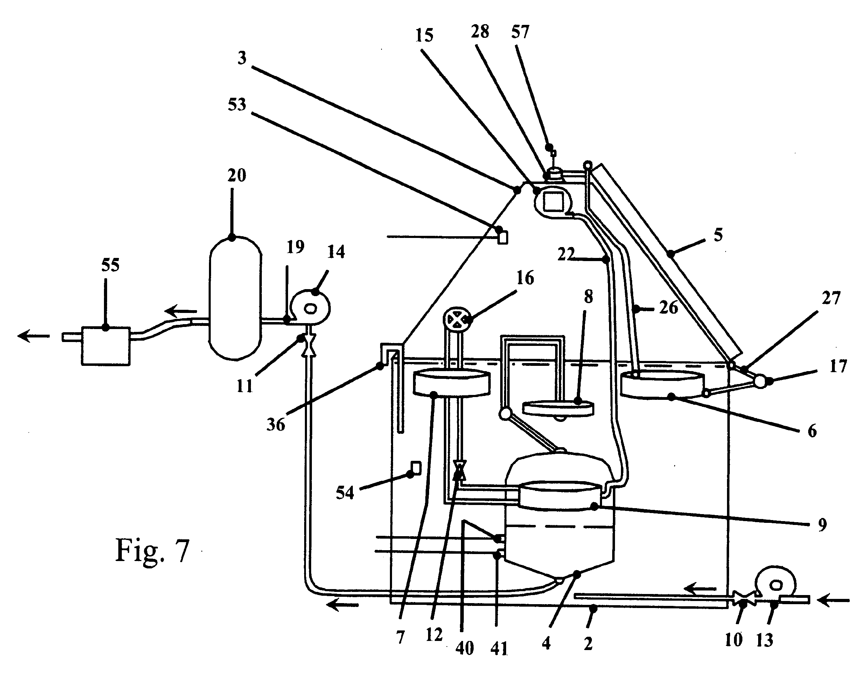

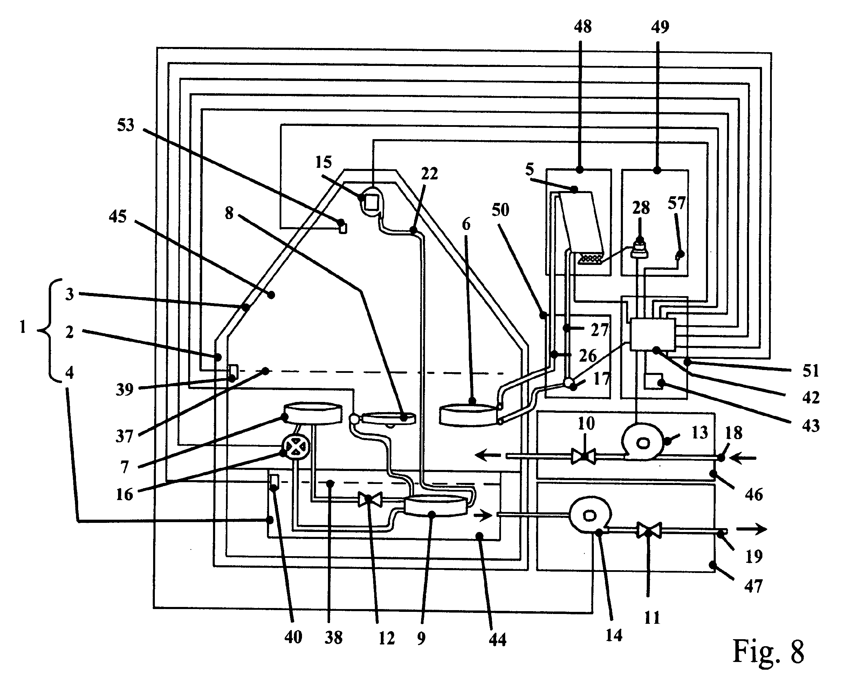

Advantageously the hood (3) is equipped with guides (29) on which the supporting structure of the solar panels (5) can move, thus allowing for the movement of the panels. In the embodiment shown the supporting structure of the solar panels (5) can rotate (Fig. 2) on the guides (29) of the hood (3) along an arc of 180° in order to have the maximum solar energy of the day. In this way maximum efficiency is obtained in the generation of the electric power by the solar panels (5) and an optimal energy balance is obtained for the whole day. Obviously the photovoltaic solar panel (5) can be mounted on a supporting structure movable on the guides (29), and the movement of the photovoltaic solar panel (5) can be controlled by a control board (42) both with regard to the sun elevation and with regard to the sun azimuth to obtain a corresponding change in inclination (62) and/or a change in orientation (63) of the photovoltaic solar panel (5). The movement is realized by means of at least one motor (28), which is supplied by means of the electric power produced by the solar panel (5). A solar exposure sensor (57) (Figures 7, 8) can provide the control board (42) with the instructions necessary to command the rotation of the solar panels (5) or the control can occur by the knowledge of the position of the installation, that is to say, knowing, for each period of the year and for each hour of the day, the corresponding data of sun elevation and azimuth. The signal of the solar exposure sensor (57) can also be a signal obtained from a corresponding signal coming from the same photovoltaic solar panel (5), without the need for an external exposure sensor (57).

As previously observed, to further increase efficiency in the generation of the electric power by the solar panels (5), they are cooled. In fact, as it is known, the efficiency of the conversion of solar energy into electric power tends to decrease as temperature increases. Since the solar panels (5) can be moved along the guides (29) of the hood (3), the cooling circuit is made by means of flexible connections, if necessary equipped with rapid connections to also allow a rapid unfastening of the structure of the hood (3) in case it is necessary to remove it from the casing (2) for maintenance or inspection operations. Therefore, the cooling circuit of the solar panels (5) will include (Figures 2, 3) outlet pipes (26) of the "hot" coolant coming from the solar panels (5) and return pipes (27) of the "cold" coolant that is sent again to the solar panels (5) for their cooling.

Advantageously, as previously explained, to increase the efficiency of the desalination station (1) according to the present invention, the heat removed from the solar panels (5) to improve their efficiency is not wasted, but, rather, it is reused to heat the brackish or salty water in the distillation process. For this purpose (Figures 7, 8) a coolant circulation pump (17) is provided, which sets in motion the coolant coming from the outlet pipes (26), sends it to a first heat exchanger (6) and afterwards sends the coolant to the solar panels (5) again by means of the return pipes (27) of the "cold" coolant. The first heat exchanger (6) allows the heat exchange between the coolant circulating in the cooling circuit of the solar panels (5) and the brackish or salty water present in the casing (2). In particular the first heat exchanger (6) is immersed in the brackish or salty water present in the casing (2). The coolant circulation pump (17) is supplied by the electric power produced by the photovoltaic solar panels (5).

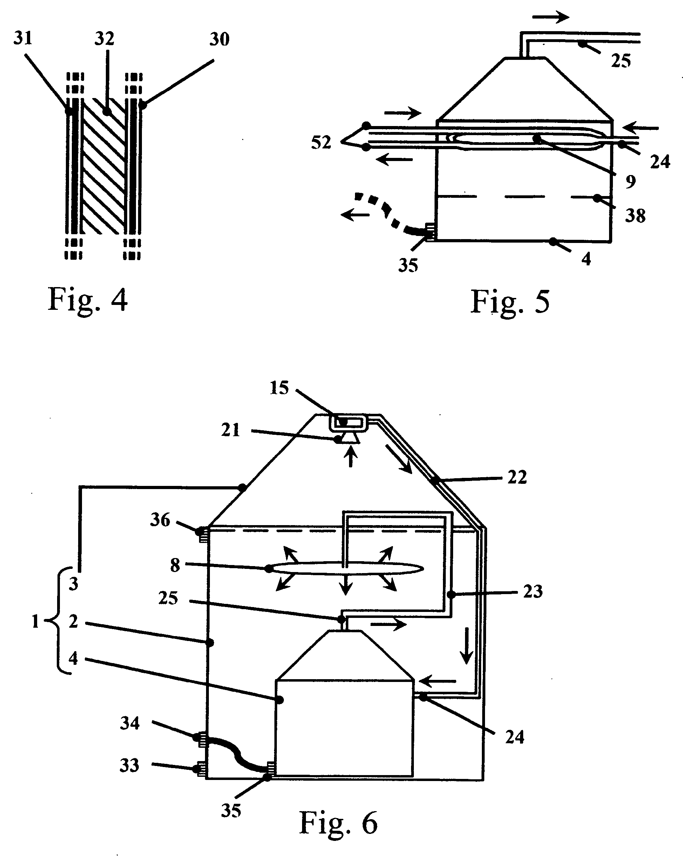

Moreover, advantageously, as explained before, to increase the efficiency of the desalination station (1) according to the present invention, the heat removed from the container (4) where the condensation occurs is used to heat the brackish or salty water in the distillation process. For this purpose (Figures 5, 7, 8) a heat pump (16) is provided which allows to remove heat from the refrigerating plate (9) present in the container (4) to transfer it by means of the circuit (52) of the heat pump, through the throttle valve (12), to a second heat exchanger (7), which is immersed in the brackish or salty water present in the casing (2), so that the heat coming from the refrigerating plate (9) is used to heat the brackish or salty water in the distillation process. The heat pump (16) is supplied by the electric power produced by the photovoltaic solar panels (5).

Therefore, in short, (Figures 7, 8), in a structural casing (2) of realization of the desalination station (1), through the water inlet (18), by means of a feeding pump (13), the brackish or salty water is introduced up to a limit level of brackish or salty water (37) determined by an outlet corresponding to a too full connection (36) and controlled by a first level sensor (39). The feeding pump (13) is supplied by the electric power produced by the photovoltaic solar panels (5) and the respective circuit is provided with a first check valve (10). Inside the casing (2) is a container (4) enclosing the refrigerating plate (9) of a heat pump (16). Inside the container (4) the damp air condenses and the so desalinated water is collected inside the container (4) itself for use in anthropic activities, also food activities upon purification. The desalinated water can be purified for example by means of a purification block (55) for instance by filtering and/or disinfection, obtaining drinking water. The desalinated water is extracted from the container (4), by means of a drawing pump (14) the circuit of which includes a second check valve (11) and the desalinated water is made available at the water outlet (19). The drawing pump (14) can be for example controlled by a second level sensor (40) and a third level sensor (41) one of which checks the activation of the drawing pump (14) when the level of desalinated water (38) is higher than a given threshold and the other checks its switching off when the drawing pump (14) has sufficiently lowered the level of desalinated water. The drawing pump (14) is supplied by the electric power produced by the photovoltaic solar panels (5). An accumulation container (20) of the desalinated water can also be provided.

Furthermore, the efficiency of the desalination station (1) according to the present invention is improved by the change in the evaporation and condensation pressures. As previously observed, evaporation increases as pressure decreases and, in a similar way, the condensation of water vapour increases as pressure increases. Therefore, by sucking in some air and forcing it to pass at a certain depth in the liquid, both a depression and an increase in the equivalent surface of evaporation are obtained. This is realized by immersing an air diffuser (8) below the first level (37) of salty or brackish water and conveying the damp air drawn by the hood (3) towards the refrigerating plate (9). A damp air circulation pump (15) is installed inside the casing (2) and creates a depression in the hood (3) to favour water evaporation and an overpressure in the container (4) to favour vapour condensation.

As previously observed, the condensation temperature is determined by the heat pump (16), which returns the heat taken from the container (4) in favour of the evaporation in the casing (2).

The level of the diffuser (8) with respect to the level of brackish or salty water (37) determines the depression of stimulation of the evaporation while the characteristics of the damp air circulation pump (15) determine the pressure provided to favour the condensation to obtain the desalinated or fresh water.

The depression is given by the difference in height between the diffuser (8) and the level of brackish or salty water (37).

For example 35 cm of difference in height are equivalent to about -35 relative hPa (hectopascals); the damp air circulation pump (15) can give a pressure drop of 80 hPa with a flow of 60 m³/h absorbing about 200 electric Watts, giving a pressure for condensation of 45 hPa.

The damp air circulation pump (15) sucks in (Fig. 6) the damp air by means of a suction mouth (21) present in the hood (3) and has the characteristic of conveying the air on an damp air duct (22) at high speeds up to (Fig. 5) the damp air inlet (24): for a duct of 30mm of diameter the air volume given imposes a speed of about 24m/s to the atmospheric pressure, which is high to obtain a high humidity rate from the evaporation.

To obtain lower speeds, the air is conveyed (Fig. 5) from the dry air outlet (25) through (Fig. 6) the dry air duct (23) to a diffuser (8) that distributes it on a surface that indicatively can be two/three orders of magnitude greater (about 1m of diameter) or even more than the diameter of the duct, obtaining transit speeds on the thickness of the water for the evaporation lower than 1 m/s.

All the necessary energy is supplied by the photovoltaic solar panels (5), which, as previously observed, are maintained at room temperature to improve efficiency, the heat taken from the solar panels (5) being used to contribute towards heating the top part of the salty or brackish water favouring evaporation.

For example, a couple of high efficiency photovoltaic solar panels (5) can supply over 450W of electric power and over 2300 thermal Watts able to supply the necessary electrical appliances and provide evaporation with about 350cal (1260kcal/h).

In the container (4) where the condensation occurs the damp air arrives at a positive pressure delta and, consequently, at a positive temperature delta. The air is cooled by means of the circuit of the heat pump (16) obtaining the drying of the air. This dried air is sucked and sent to the diffuser to be humidified again.

The circuit of the heat pump (16) is required to take the damp air to dew temperature for the condensation of the humidity contained therein; this is obtained by cooling the inlet air from about 40°C to about 0°C by means of a heat pump (16) that absorbs about 200 electrical Watts.

On the top of the container (4) of condensation and above the dry air diffuser (8) are immersed both the first heat exchanger (6) relative to the cooling of the solar panels (5) and the second heat exchanger (7) relative to the circuit of the heat pump (16). The heat exchangers (6, 7) are immersed in salty or brackish water, in order to maintain the top of the salty or brackish water at a positive temperature delta contrasting the heat reduction caused by evaporation.

In this way the heat taken for the cooling of the solar panels (5) and the heat taken from the condensation of the vapour of the damp air are returned to the salty or brackish water to increase its temperature and favour its evaporation.

The amount of heat given to evaporation is equal to about 1500kcal/h such as to raise the temperature of the superficial mass of the salty or brackish water to about 35°C.

To limit energy contributing towards obtaining a desalination station autonomous and independent of external electrical connections, the orientation (rotation) of the solar panels (5) can occur for example on a hour basis while the activation of the damp air circulation pump (15) and of the heat pump (16) occurs thanks to the photovoltaic state of the panels.

Advantageously, the introduction of the salty or brackish water through the water inlet (18), with a relative re-balance of the salinity can be carried out in the night hours, while the extraction of the fresh water can be activated on threshold levels established by the level sensors (40, 41) as explained before.

In order to limit energy waste for the loading of seawater the desalination station (1) can be placed in correspondence of sea coasts and partially immersed in seawater in such a way that the changes in sea level due to changes in tide levels and/or wave motion contribute towards the necessary refilling. Alternatively, or in combination with this solution, one can resort to the feeding pump (13) which in the night hours can be supplied (Fig. 8) by means of a battery (43) that is recharged during the day by means of the photovoltaic solar panels (5) themselves. Obviously the battery (43) can be used both to provide the necessary electric power making up for the possible losses of the electric power generated by the photovoltaic solar panel (5) during temporary obscuration of the sun, and to provide the electric power necessary for the night replacement or the night replenishment of the water. The fact that the desalination station is partially immersed in seawater or anyway in the water to be treated, in addition to the advantage of being able to obtain a natural replacement of the water contained to be desalinated or from which remove the dissolved solids, also allows to avoid the installation of expensive ducts for the drawing of the water to be treated, with consequent benefits from the point of view of the system and of nature. In fact, besides avoiding the presence of the ducts, except for the one for the drawing of the water deriving from the desalination process, the desalination station (1) can be at least partially camouflaged by the sea level itself, reducing its visual impact.

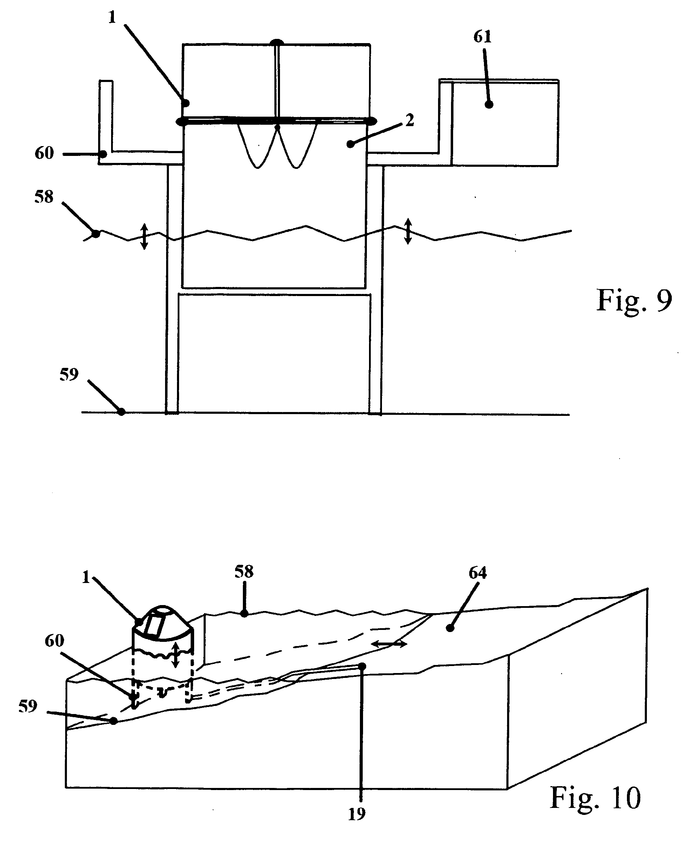

For example (Figures 9, 10), the desalination station (1) can be mounted in correspondence of a coast (64) on a supporting structure (60) resting on the sea bed (59) or floating so that the desalination station (1) is partially immersed in correspondence of the sea level (58). The supporting structure (60) may also advantageously comprise an auxiliary room (61) for containing the previously described auxiliary devices external to the casing (2), such as the feeding pump (13), the drawing pump (14), the control board (42), the battery (43), etc. The feeding pump (13) supplied by the electric power generated by the photovoltaic solar panel (5) and/or by the battery (43), therefore, is suitable to contribute to the replacement and/or to the replenishment of the salty or brackish water or anyway water with dissolved solids contained in the casing (1) by drawing water from a water inlet (18). The change in tide levels and/or wave motion (schematically represented by the arrows in Figures 9, 10) will contribute to the water fill up of the casing (2), if necessary assisted by the action of the feeding pump (13).

An illustrative and non-limiting design of the desalination station (1) according to the present invention, for example, could correspond to a fresh water output capacity of about 50l/h in peak time and a typical daily output of over 300l, sufficient for the domestic uses of a family with annexed fixtures. Obviously, according to needs, greater sizes are also possible, respecting the proper correspondences for the energies necessary for operation.

The structure can be made (Fig. 4) completely of composite materials and, to further increase efficiency, it will preferably include an internal structure (30) and an external structure (31) between which there is an insulator (32). This applies both to the container (4) and to the casing (2). The structure realized will preferably be load-bearing, so that the installation is particularly simple without the need for particular additional works.

In conclusion, the desalination station (1) according to the present invention (Fig. 8) includes:
- a cold area (44) consisting of the container (4) in which the condensation of the water vapour occurs and comprising level sensors (40, 41) for the start and the end of the drawing phase on the basis of the level (38) of the desalinated water and further comprising the refrigerating plate (9) with a respective throttle valve (12);
- a hot area (45) defined by the casing (2) comprising the first heat exchanger (6), the second heat exchanger (7), the dry air diffuser (8) and the corresponding circulation pump (15) of the damp air with the respective ducts of damp air (22) and of dry air (23) and further comprising the first level sensor (39) for measuring the level (37) of the brackish or salty water;
- a feeding area (46) comprising the feeding pump (13) with the respective first check valve (10);
- a drawing area (47) comprising the drawing pump (14) with the respective second check valve (11);
- a power supply generation area (48) comprising the photovoltaic solar panels (5);
- a movement area (49) of the photovoltaic solar panels (5) comprising the motor (28) and the possible exposure sensor (57), the signal of which, as previously explained, can also be a signal obtained from a corresponding signal coming from the photovoltaic solar panel (5) itself, without the need for an external exposure sensor (57);
- a heating area (50) comprising the coolant circulation pump (17) of the solar panels (5) to transfer their heat to the hot area (45) by means of the respective outlet pipes (26) and return pipes (27) of the coolant;
- a control area (51) comprising the control board (42) and a possible rechargeable battery (43).

Finally, the desalination station (1) according to the present invention is of the distillation type and comprises a hot area (45) defined by a casing (2) and by a hood (3) containing water with dissolved solids that is caused to evaporate to generate water vapour, up to a first level (37), a cold area (44) consisting of a container (4) in which the condensation of the water vapour coming from the hot area (45) occurs with the formation of water without dissolved solids or fresh water up to a second level (38), at least one heat pump (16) that transfers heat from a refrigerating plate (9) present in the cold area (44) to a second heat exchanger (7) that gives heat to the water with dissolved solids causing the evaporation of the water contained in the casing (2) with the formation of water vapour in correspondence of the hood (3), transferring means (15) of the water vapour from the hood (3) to the refrigerating plate (9), a feeding area (46) of the water with dissolved solids towards the casing (2), a drawing area (47) of the condensed water and further comprises a power supply generation area (48) which comprises at least one photovoltaic solar panel (5) and a heating area (50), the photovoltaic solar panel (5) generating the electric power supply at least for the heat pump (16) and the transferring means (15) of the water vapour making said desalination station (1) autonomous from other external energy sources, the photovoltaic solar panel (5) being combined with a circulation system (56) of a cooling fluid that is put in circulation by a circulation pump (17) present in the heating area (50) supplied by said photovoltaic solar panel (5), the cooling fluid circulating in correspondence of the solar panel (5) and transferring heat from the solar panel (5) to the hot area (45) by means of a first heat exchanger (6) that gives heat to the water with dissolved solids contained in the casing (2) of the hot area (45).

Furthermore, the system preferably comprises other sensors, such as a first hood temperature sensor (53), a second container temperature sensor (54), which, together with the first level sensor (39), the second level sensor (40), the third level sensor (41) are connected to the control board (42) that carries out the corresponding control functions of the elements present, such as the motor (28) for moving the photovoltaic solar panels (5), the feeding pump (13), the drawing pump (14), the damp air circulation pump (15), the heat pump (16), the coolant circulation pump (17).

In a different embodiment, essentially assimilable to that schematically represented in Fig. 8, the container (4) can be not immersed in the casing (2), that is to say, not immersed in the salty or brackish water, but the container (4) can be placed under the casing (2).

It will be obvious to those skilled in the art that the solar panels (5) can also be made up of one or more photovoltaic solar panels in combination with one or more thermal solar panels according to the total size of the system and to the performances required. Therefore, the photovoltaic solar panel (5) can be combined with one or more thermal solar panels to heat the water to be evaporated.

As previously observed, the desalination station (1) can include various sensor means, such as a hood temperature sensor (53) and/or a container temperature sensor (54) and/or a panel temperature sensor and/or an exposure sensor (57) and/or humidity measuring sensors and/or level sensors (39, 40, 41). Said control board (42) will preferably control the activation of the possible pumps present according to the embodiment of the present invention, such as the feeding pump (13) if present, the drawing pump (14) if present, the damp air circulation pump (15), the heat pump (16), the coolant circulation pump (17) and/or the activation of the possible motors (28) for moving the photovoltaic and/or thermal solar panels (5) depending on the measurements carried out by means of said sensor means. For example the control board (42) can control the coolant circulation pump (17) and/or the motors (28) for moving the photovoltaic and/or thermal solar panels (5) according to the signal provided by the exposure sensor (57) or to an equivalent signal coming from the solar panel (5) itself and/or according to the signal provided by the panel temperature sensor. In a similar way, the control board (42) can control the possible drawing pump (14) according to the signals provided by the level sensors (40, 41) or the possible feeding pump (13) according to the signal provided by the first level sensor (39). In a similar way, the control board (42) can control the activation of the heat pump (14) according to the signals provided by the humidity measuring sensors and/or according to the signal provided by the hood temperature sensor (53) and/or according to the signal provided by the container temperature sensor (54).

Therefore, in general, the desalination station (1) can comprise sensor means including a hood temperature sensor (53) and/or a container temperature sensor (54) and/or a panel temperature sensor and/or an exposure sensor (57) and/or humidity measuring sensors and/or level sensors (39, 40, 41), and the activation of the possible pumps (13, 14, 15, 16, 17) and/or of the possible motors (28) can be controlled by the control board (42) depending on the measurements carried out by means of the sensor means.

### Used nomenclature

With reference to the identification numbers reported in the enclosed figures, the following nomenclature was used:
1. Desalination station
2. Casing
3. Hood
4. Container
5. Solar panel
6. First heat exchanger
7. Second heat exchanger
8. Diffuser
9. Refrigerating plate
10. First valve
11. Second valve
12. Throttle valve
13. Feeding pump
14. Drawing pump
15. Damp air circulation pump or transferring means of the water vapour
16. Heat pump
17. Coolant circulation pump
18. Water inlet
19. Water outlet
20. Tank
21. Suction mouth
22. Damp air duct
23. Dry air duct
24. Damp air inlet
25. Dry air outlet
26. Hot coolant outlet pipe
27. Cold coolant return pipe
28. Motor
29. Guide
30. Internal structure
31. External structure
32. Insulator
33. Feeding connection
34. External drawing connection
35. Internal drawing connection
36. Too full connection
37. First level or level of brackish or salty water or water with dissolved solids
38. Second level or level of desalinated water or fresh water
39. First level sensor
40. Second level sensor
41. Third level sensor
42. Control board
43. Battery
44. Cold area
45. Hot area
46. Feeding area
47. Drawing area
48. Power supply generation area
49. Movement area
50. Heating area
51. Control area
52. Circuit of the heat pump
53. First hood temperature sensor
54. Second container temperature sensor
55. Purification block
56. Structural section or circulation system
57. Exposure sensor
58. Sea level
59. Sea bed
60. Supporting structure
61. Auxiliary room
62. Change in inclination
63. Change in orientation
64. Coast

## Claims

1. Desalination station (1) of the distillation type comprising: - a hot area (45) defined by a casing (2) and by a hood (3) containing water with dissolved solids up to a first level (37); - a feeding area (46) of the water with dissolved solids towards said casing (2); - a cold area (44) consisting of a container (4) in which the condensation of said water vapour coming from said hot area (45) occurs, said condensation involving the formation of water without said dissolved solids up to a second level (38); - a drawing area (47) of the water which condenses in said cold area (44); - at least one heat pump (16) transferring heat from a refrigerating plate (9) present in said cold area (44) to a second heat exchanger (7) present in said hot area for giving heat to said water with dissolved solids and causing the evaporation of said water contained in said casing (2) with the formation of water vapour in said hood (3); - transferring means (15) of said water vapour from the hood (3) of said hot area (45) to the refrigerating plate (9) of said cold area (44); - a control area (51) comprising a control board (42) for controlling the operation of at least said heat pump (16) ; - a power supply generation area (48) comprising at least one photovoltaic solar panel (5) for generating electric power supply for at least said heat pump (16) and said transferring means (15) of the water vapour and making said desalination station (1) autonomous from other external energy sources; and - a heating area (50), wherein the at least one photovoltaic solar panel (5) is combined with a circulation system (56) of a cooling fluid, said heating area (50) comprising a circulation pump (17) of the cooling fluid supplied by said photovoltaic solar panel (5) and controlled by a control board (42) for circulating said cooling fluid in correspondence of said at least one solar panel (5), such that heat from said at least one solar panel (5) is transferred to a first heat exchanger (6) which transfers heat to the water with dissolved solids contained in the casing (2) of said hot area (45); **characterised in that** the water vapour from the hood (3) of said hot area (45) is transferred to the refrigerating plate (9) of said cold area (44) by means of a damp air circulation pump (15), which sucks in damp air by means of a suction inlet (21) present in said hood (3) creating thus a depression in said hood (3) and favouring the evaporation of water, and a damp air duct (22), which conveys said water vapour at high speeds up to said cold area (44), creating thus an overpressure in said container (4) and favouring the condensation of the vapour; wherein the hot area (45) further comprises a diffuser (8) immersed in said water with dissolved solids at a given level with respect to said first level (37) of the water with dissolved solids, such that dry air present in the container (4) of said cold area is drawn from an air outlet (25) and conveyed through a dry air duct (23) up to said diffuser (8), the level of said diffuser (8) with respect to said first level (37) of the water with dissolved solids defining a thickness of water, which determines a corresponding depression of stimulation of the evaporation; and wherein said diffuser (8) distributes said conveyed air on a surface which is at least two orders of magnitude greater than the section surface of said damp air duct (22) for obtaining a corresponding transit speed reduction of said conveyed air on the thickness of the water for the evaporation.

2. Desalination station (1) according to the previous claim, **characterised in that** said water with dissolved solids is sea water, said desalination station (1) being mounted on a supporting structure (60) in correspondence of a sea coast, lying on the sea bed or floating, said desalination station (1) being partially immersed in correspondence of the sea level (58), the replacement of the water contained in said casing (2) occurring by means of the change in said sea level (58) due to the change in tide levels and/or wave motion.

3. Desalination station (1) according to any of the previous claims 1 to 2, **characterised in that** said casing (2) is a cylindrical casing into which the water with dissolved solids is introduced through a feeding connection (33), said cylindrical casing (2) being closed by said hood (3), said hood (3) being of frusto-conical shape, said container (4) being contained inside the volume defined by said cylindrical casing (2), said container (4) being of cylindrical shape with a frusto-conically-shaped tapered end, an internal drawing connection (35) which is present on said container (4) being connected to a corresponding external drawing connection (34) for the drawing of the water obtained by means of the condensation of said water vapour generated in said casing (2), said hood (3) being a separate body with respect to said casing (2), said hood (3) being removable for maintenance and/or inspection operations, said at least one solar panel (5) being mounted in correspondence of the tilted surface of said frusto-conically-shaped hood (3).

4. Desalination station (1) according to any of the previous claims 1 to 3, **characterised in that** it further includes a movement area (49) of said at least one photovoltaic solar panel (5), said movement area (49) comprising at least one motor (28) supplied by means of the electric power generated by said at least one photovoltaic solar panel (5), said hood (3) comprising guides (29), said at least one photovoltaic solar panel (5) being mounted on a supporting structure movable on said guides (29), the movement of said at least one photovoltaic solar panel (5) being controlled by said control board (42) with respect to the sun elevation and/or azimuth obtaining a corresponding change in inclination (62) and/or a change in orientation (63) of said photovoltaic solar panel (5).

5. Desalination station (1) according to the previous claim and to claim, 3 **characterised in that** said change in orientation (63) of said photovoltaic solar panel (5) with respect to the azimuthal position of the sun occurs by means of the rotation of said supporting structure movable on said guides (29) along the tilted surface of said frusto-conically-shaped hood (3).

6. Desalination station (1) according to any of the previous claims 1 to 5, **characterised in that** it further includes a purification block (55) for the additional filtering and/or disinfection of the water obtained by condensation of said water vapour, obtaining drinking water.

7. Desalination station (1) according to any of the previous claims 1 to 6, **characterised in that** it further includes an accumulation container (20) of the water obtained by condensation of said water vapour, the filling of said accumulation container (20) occurring by means of a drawing pump (14) supplied by means of the electric power generated by said at least one photovoltaic solar panel (5), said drawing pump (14) being controlled by a second level sensor (40) and a third level sensor (41) one of which checks the activation of said drawing pump (14) when said second water level (38) is higher than a given threshold and the other one checks its switching off when said drawing pump (14) has sufficiently lowered said second water level (38).

8. Desalination station (1) according to any of the previous claims 1 to 7, **characterised in that** it further includes a feeding pump (13) supplied by means of the electrical power generated by said at least one photovoltaic solar panel (5), said feeding pump (13) being intended to contribute to the replacement and/or to the replenishment of the water with dissolved solids contained in said casing (1) by drawing water with dissolved solids from a water inlet (18).

9. Desalination station (1) according to any of the previous claims 1 to 8, **characterised in that** it includes at least one battery (43) which is rechargeable by means of the electric power supplied by said at least one photovoltaic solar panel (5), said battery (43) providing the necessary electric power making up for the possible losses of the electric power generated by the photovoltaic solar panel (5) and/or providing the electric power necessary for the night replacement of water with dissolved solids.

10. Desalination station (1) according to any of the previous claims 1 to 9, **characterised in that** said container (4) and/or said casing (2) comprise an internal structure (30) and an external structure (31) made of composite materials between which an insulating material (32) is present.

11. Desalination station (1) according to any of the previous claims 1 to 10, **characterised in that** said photovoltaic solar panel (5) is combined with a corresponding thermal panel for the heating of said water with dissolved solids.

12. Desalination station (1) according to any of the previous claims 1 to 11, **characterised in that** it comprises sensor means including a hood temperature sensor (53) and/or a container temperature sensor (54) and/or a panel temperature sensor and/or an exposure sensor (57) and/or humidity measuring sensors and/or level sensors (39, 40, 41), the activation of the possible pumps (13, 14, 15, 16, 17) and/or of the possible motors (28) being controlled by said control board (42) depending on the measurements carried out by means of said sensor means.

## Patentansprüche

1. Entsalzungsstation (1) vom Destillationstyp, umfassend:
- einen heißen Bereich (45), welcher durch ein Gehäuse (2) und durch eine Haube (3) definiert ist, welcher Wasser mit gelösten Feststoffen bis zu einem ersten Pegel (37) enthält;
- einen Einspeisungsbereich (46) des Wassers mit gelösten Feststoffen in Richtung des Gehäuses (2); - einen kalten Bereich (44), welcher aus einem Behälter (4) besteht, in welchem die Kondensation des Wasserdampfs stattfindet, welcher von dem heißen Bereich (45) kommt, wobei die Kondensation das Bilden von Wasser ohne die gelösten Feststoffe bis zu einem zweiten Pegel (38) umfasst; - einen Abzugbereich (47) des Wassers, welches in dem kalten Bereich (44) kondensiert; - wenigstens eine Wärmepumpe (16), welche Wärme von einer Kühlplatte (9), welche in dem kalten Bereich (44) vorliegt, zu einem zweiten Wärmetauscher (7) transferiert, welcher in dem heißen Bereich vorliegt, um Wärme an das Wasser mit gelösten Feststoffen abzugeben und das Verdampfen des in dem Gehäuse (2) enthaltenen Wassers mit der Bildung von Wasserdampf in der Haube (3) hervorzurufen; - Transfermittel (15) des Wasserdampfs von der Haube (3) des heißen Bereichs (45) zu der Kühlplatte (9) des kalten Bereichs (44); - einen Regel-/Steuerbereich (51), umfassend eine Regel-/Steuerplatine (42) zum Regeln/Steuern des Betriebs der wenigstens einen Wärmepumpe (16); - einen Stromversorgungs-Erzeugungsbereich (48), umfassend wenigstens ein Fotovoltaik-Solarpaneel (5) zum Erzeugen von elektrischer Energieversorgung für die wenigstens eine Wärmepumpe (16) und die Transfermittel (15) des Wasserdampfs, und um die Entsalzungsstation (1) von anderen externen Energiequellen autonom zu machen; und - einen Heizbereich (50), wobei das wenigstens eine Fotovoltaik-Solarpaneel (5) mit einem Zirkulationssystem (56) eines Kühlfluids kombiniert ist, wobei der Heizbereich (50) eine Zirkulationspumpe (17) des Kühlfluids umfasst, welches von dem Fotovoltaik-Solarpaneel (5) geliefert ist und durch eine Regel-/Steuerplatine (42) geregelt/gesteuert ist, damit das Kühlfluid im Zusammenspiel mit dem wenigstens einen Solarpaneel (5) derart zirkuliert, dass Wärme von dem wenigstens einen Solarpaneel (5) zu einem ersten Wärmetauscher (6) übertragen wird, welcher Wärme an das Wasser mit gelösten Feststoffen überträgt, welches in dem Gehäuse (2) des heißen Bereichs (45) enthalten ist; **dadurch gekennzeichnet, dass** der Wasserdampf von der Haube (3) des heißen Bereichs (45) zu der Kühlplatte (9) des kalten Bereichs (44) mittels einer Feuchtluft-Zirkulationspumpe (15), welche feuchte Luft mittels eines Saugeinlasses (21), welcher in der Haube (3) vorhanden ist, einsaugt, dadurch einen Unterdruck in der Haube (3) erzeugt, und das Verdampfen von Wasser begünstigt, und einer Feuchtluft-Leitung (22) übertragen wird, welche den Wasserdampf in hohen Geschwindigkeiten bis zu dem kalten Bereich (44) befördert, dadurch einen Überdruck in dem Behälter (4) erzeugt, und die Kondensation des Dampfers begünstigt; wobei der heiße Bereich (45) ferner einen Diffusor (8) umfasst, welcher in das Wasser mit gelösten Feststoffen zu einem vorgegebenen Pegel in Bezug auf den ersten Pegel (37) des Wassers mit gelösten Feststoffen derart eingetaucht ist, dass in dem Behälter (4) des kalten Bereichs vorhandene trockene Luft von einem Luftauslass (25) eingezogen wird und durch eine Trockenluft-Leitung (23) bis zu dem Diffusor (8) befördert wird, wobei der Pegel des Diffusors (8) in Bezug auf den ersten Pegel (37) des Wassers mit gelösten Feststoffen eine Dicke von Wasser definiert, welche einen entsprechenden Stimulations-Unterdruck der Verdampfung bestimmt; und wobei der Diffusor (8) die beförderte Luft an einer Fläche verteilt, welche um wenigstens zwei Größenordnungen größer ist als die Querschnittsfläche der Feuchtluft-Leitung (22), um eine entsprechende Transit-Geschwindigkeits-Reduktion der beförderten Luft an der Dicke des Wassers für die Verdampfung zu erhalten.

2. Entsalzungsstation (1) nach dem vorhergehenden Anspruch, **dadurch gekennzeichnet, dass** das Wasser mit gelösten Feststoffen Meerwasser ist, wobei die Entsalzungsstation (1) an eine Halterungsstruktur (60) in Einklang mit einer Meeresküste, auf dem Meeresgrund liegend oder schwimmend, montiert ist, wobei die Entsalzungsstation (1) im Zusammenspiel mit der Meereshöhe (58) teilweise eingetaucht ist, wobei der Austausch des Wassers, welches in dem Gehäuse (2) enthalten ist, mittels der Änderung der Meereshöhe (58) auf Grund der Änderung in Tiden-Pegel und/oder Wellenbewegung stattfindet.

3. Entsalzungsstation (1) nach einem der vorhergehenden Ansprüche 1 bis 2, **dadurch gekennzeichnet, dass** das Gehäuse (2) ein zylindrisches Gehäuse ist, in welches das Wasser mit gelösten Feststoffen durch eine Einspeisungsverbindung (33) eingeführt wird, wobei das zylindrische Gehäuse (2) durch die Haube (3) geschlossen ist, wobei die Haube (3) von kegelstumpfförmiger Form ist, wobei der Behälter (4) in dem Volumen aufgenommen ist, welches durch das zylindrische Gehäuse (2) definiert ist, wobei der Behälter (4) von zylindrischer Form mit einem kegelstumpfförmig verjüngten Ende ist, wobei eine interne Einzugsverbindung (35), welche in dem Behälter (4) vorhanden ist, mit einer entsprechenden externen Einzugsverbindung (34) für das Einziehen des Wassers verbunden ist, welches mittels der Kondensation des Wasserdampfs erhalten wird, welcher in dem Gehäuse (2) erzeugt wird, wobei die Haube (3) ein separater Körper in Bezug auf das Gehäuse (2) ist, wobei die Haube (3) für Wartungs- und/oder Inspektionsarbeiten entfernbar ist, wobei das wenigstens eine Solarpaneel (5) im Zusammenspiel mit der geneigten Fläche der kegelstumpfförmigen Haube (3) montiert ist.

4. Entsalzungsstation (1) nach einem der vorhergehenden Ansprüche 1 bis 3, **dadurch gekennzeichnet, dass** sie ferner einen Bewegungsbereich (49) des wenigstens einen Fotovoltaik-Solarpaneels (5) umfasst, wobei der Bewegungsbereich (49) wenigstens ein Motor (28) umfasst, welcher mit der elektrischen Energie, welche durch das wenigstens eine Fotovoltaik-Solarpaneel (5) erzeugt wird, versorgt ist, wobei die Haube (3) Führungen (29) umfasst, wobei das wenigstens eine Fotovoltaik-Solarpaneel (5) an einer Halterungsstruktur montiert ist, welche an den Führungen (29) bewegbar ist, wobei die Bewegung des wenigstens einen Fotovoltaik-Solarpaneels (5) durch die Regel-/Steuerplatine (42) in Bezug auf die Sonnenhöhe und/oder den Sonnen-Azimut geregelt/gesteuert ist, wodurch eine entsprechende Änderung in Inklination (62) und/oder eine Änderung in Orientierung (63) des Fotovoltaik-Solarpaneels (5) erhalten wird.

5. Entsalzungsstation (1) nach dem vorhergehenden Anspruch und nach Anspruch 3, **dadurch gekennzeichnet, dass** die Änderung in Orientierung (63) des Fotovoltaik-Solarpaneels (5) in Bezug auf die Azimut-Position der Sonne mittels der Rotation der Halterungsstruktur stattfindet, welche an den Führungen (29) entlang der geneigten Fläche der kegelstumpfförmigen Haube (3) bewegbar ist.

6. Entsalzungsstation (1) nach einem der vorhergehenden Ansprüche 1 bis 5, **dadurch gekennzeichnet, dass** sie ferner einen Reinigungsblock (55) für die zusätzliche Filtrierung und/oder Desinfektion des Wassers umfasst, welches durch Kondensation des Wasserdampfs erhalten wird, wodurch Trinkwasser erhalten wird.

7. Entsalzungsstation (1) nach einem der vorhergehenden Ansprüche 1 bis 6, **dadurch gekennzeichnet, dass** sie ferner einen Sammelbehälter (20) des Wassers umfasst, welches durch Kondensation des Wasserdampfs erhalten wird, wobei das Befüllen des Sammelbehälters (20) mittels einer Einzugspumpe (14) stattfindet, welche mit der elektrischen Energie versorgt wird, welche durch das wenigstens eine Fotovoltaik-Solarpaneel (5) erzeugt wird, wobei die Einzugspumpe (14) durch einen zweiten Pegel-Sensor (40) und einen dritten Pegel-Sensor (41) geregelt/gesteuert ist, wovon einer die Aktivierung der Einzugspumpe (14) überprüft, wenn der zweite Wasserpegel (38) höher ist als ein vorgegebener Schwellenwert, und der andere dessen Abschalten überprüft, wenn die Einzugspumpe (14) den zweiten Wasserpegel (38) ausreichend abgesenkt hat.

8. Entsalzungsstation (1) nach einem der vorhergehenden Ansprüche 1 bis 7, **dadurch gekennzeichnet, dass** sie ferner eine Einspeisungspumpe (13) umfasst, welche mit der elektrischen Energie versorgt wird, welche durch das wenigstens eine Fotovoltaik-Solarpaneel (5) erzeugt wird, wobei die Einspeisungspumpe (13) dazu bestimmt ist, zu dem Austausch und/oder der Auffüllung des Wassers mit gelösten Feststoffen, welches in dem Gehäuse (1) enthalten ist, durch Einziehen von Wasser mit gelösten Feststoffen von einem Wassereinlass (18) beizutragen.

9. Entsalzungsstation (1) nach einem der vorhergehenden Ansprüche 1 bis 8, **dadurch gekennzeichnet, dass** sie ferner wenigstens eine Batterie (43) umfasst, welche mittels der elektrischen Energie wiederaufladbar ist, welche durch das wenigstens eine Fotovoltaik-Solarpaneel (5) geliefert wird, wobei die Batterie (43) die notwendige elektrische Energie bereitstellt, welche mögliche Verluste der elektrischen Energie, welche durch das Fotovoltaik-Solarpaneel (5) erzeugt wird, ausgleicht, und/oder die elektrische Energie bereitstellt, welche für den Nachtaustausch von Wasser mit gelösten Feststoffen notwendig ist.

10. Entsalzungsstation (1) nach einem der vorhergehenden Ansprüche 1 bis 9, **dadurch gekennzeichnet, dass** der Behälter (4) und/oder das Gehäuse (2) eine interne Struktur (30) und eine externe Struktur (31) umfassen/umfasst, welche aus Verbundmaterialien hergestellt sind, zwischen welchen ein Isolationsmaterial (32) vorhanden ist.

11. Entsalzungsstation (1) nach einem der vorhergehenden Ansprüche 1 bis 10, **dadurch gekennzeichnet, dass** das Fotovoltaik-Solarpaneel (5) mit einem entsprechenden Thermalpaneel für die Erwärmung des Wassers mit gelösten Feststoffen kombiniert ist.

12. Entsalzungsstation (1) nach einem der vorhergehenden Ansprüche 1 bis 11, **dadurch gekennzeichnet, dass** sie Sensormittel umfasst, umfassend einen Hauben-Temperatursensor (53) und/oder einen Behälter-Temperatursensor (54) und/oder einen Paneel-Temperatursensor und/oder einen Belichtungs-Sensor (57) und/oder Feuchtigkeit messende Sensoren und/oder Pegel-Sensoren (39, 40, 41), wobei die Aktivierung der möglichen Pumpen (13, 14, 15, 16, 17) und, oder der möglichen Motoren (28) durch die Regel-/Steuerplatine (42) in Abhängigkeit von den Messungen geregelt/gesteuert sind, welche mittels der Sensormittel ausgeführt werden.

## Revendications

1. Station de dessalement (1) du type à distillation comprenant : - une zone chaude (45) définie par un carter (2) et par un capot (3) contenant de l'eau comprenant des solides dissous jusqu'à un premier niveau (37) ; - une zone d'alimentation (46) en eau comprenant des solides dissous en direction dudit carter (2); - une zone froide (44) composée d'un contenant (4) dans lequel la condensation de ladite vapeur d'eau provenant de ladite zone chaude (45) se produit, ladite condensation impliquant la formation d'eau sans lesdits solides dissous jusqu'à un second niveau (38) ; - une zone de tirage (47) de l'eau qui se condense dans ladite zone froide (44); - au moins une pompe à chaleur (16) transférant de la chaleur à partir d'une plaque réfrigérante (9) présente dans ladite zone froide (44) vers un second échangeur de chaleur (7) présent dans ladite zone chaude pour donner de la chaleur à ladite eau comprenant des solides dissous et provoquant l'évaporation de ladite eau contenue dans ledit carter (2) avec la formation de vapeur d'eau dans ledit capot (3); - un moyen de transfert (15) de ladite vapeur d'eau à partir de la hotte (3) de ladite zone chaude (45) vers la plaque réfrigérante (9) de ladite zone froide (44) ; - une zone de commande (51) comprenant un panneau de commande (42) pour commander le fonctionnement d'au moins ladite pompe à chaleur (16) ; - une zone de génération d'énergie (48) comprenant au moins un panneau solaire photovoltaïque (5) pour générer de l'énergie électrique pour au moins ladite pompe à chaleur (16) et ledit moyen de transfert (15) de la vapeur d'eau et rendant ladite station de dessalement (1) autonome par rapport à d'autres sources d'énergie externes ; et - une zone de chauffage (50), dans laquelle le au moins un panneau solaire photovoltaïque (5) est combiné à un système de circulation (56) d'un fluide de refroidissement, ladite zone de chauffage (50) comprenant une pompe de circulation (17) du fluide de refroidissement fourni par ledit panneau solaire photovoltaïque (5) et commandé par un panneau de commande (42) pour la circulation dudit fluide de refroidissement en correspondance avec ledit au moins panneau solaire (5), de sorte que la chaleur provenant dudit au moins un panneau solaire (5) soit transférée vers un premier échangeur de chaleur (6) qui transfère de la chaleur vers l'eau comprenant des solides dissous contenue dans le carter (2) de ladite zone chaude (45); **caractérisée en ce que** la vapeur d'eau provenant du capot (3) de ladite zone chaude (45) est transférée vers la plaque réfrigérante (9) de ladite zone froide (44) au moyen d'une pompe de circulation d'air humide (15), qui aspire de l'air humide au moyen d'une admission d'aspiration (21) présente dans ledit capot (3), créant ainsi une dépression dans ladite hotte (3) et favorisant l'évaporation d'eau, et une conduite d'air humide (22), qui transporte ladite vapeur d'eau à haute vitesse jusqu'à ladite zone froide (44), créant ainsi une surpression dans ledit contenant (4) et favorisant la condensation de la vapeur; dans laquelle la zone chaude (45) comprend en outre un diffuseur (8) immergé dans ladite eau comprenant des solides dissous à un niveau donné par rapport audit premier niveau (37) de l'eau comprenant des solides dissous, de sorte que de l'air sec présent dans le contenant (4) de ladite zone froide soit tiré à partir d'une sortie d'air (25) et transporté à travers une conduite d'air sec (23) jusqu'audit diffuseur (8), le niveau dudit diffuseur (8) par rapport audit premier niveau (37) de l'eau comprenant des solides dissous définissant une épaisseur d'eau, qui détermine une dépression correspondante de stimulation de l'évaporation; et dans laquelle ledit diffuseur (8) distribue ledit air transporté sur une surface qui est au moins supérieure de deux ordres de grandeur à la section de surface de ladite conduite d'air humide (22) pour obtenir une réduction de vitesse de transit correspondante dudit air transporté sur l'épaisseur de l'eau pour l'évaporation.

2. Station de dessalement (1) selon la revendication précédente, **caractérisée en ce que** ladite eau comprenant des solides dissous est de l'eau de mer, ladite station de dessalement (1) étant montée sur une structure de support (60) en correspondance avec une côte maritime, reposant sur le fond de la mer ou flottant, ladite station de dessalement (1) étant partiellement immergée en correspondance avec le niveau de la mer (58), le remplacement de l'eau contenue dans ledit carter (2) se produisant au moyen du changement dudit niveau de la mer (58) en raison du changement du niveau de la marée et/ou du mouvement des vagues.

3. Station de dessalement (1) selon l'une quelconque des revendications précédentes 1 à 2, **caractérisée en ce que** ledit carter (2) est un carter cylindrique dans lequel l'eau comprenant des solides dissous est introduite par le biais d'un raccordement d'alimentation (33), ledit carter cylindrique (2) étant fermé par ledit capot (3), ledit capot (3) présentant une forme tronconique, ledit contenant (4) étant contenu à l'intérieur du volume défini par ledit carter cylindrique (2), ledit contenant (4) étant de forme cylindrique avec une extrémité en pointe tronconique, un raccordement de tirage interne (35) qui est présent sur ledit contenant (4) étant raccordé à un raccordement de tirage externe correspondant (34) pour le tirage de l'eau obtenue au moyen de la condensation de ladite vapeur d'eau générée dans ledit carter (2), ledit capot (3) étant un corps séparé par rapport audit carter (2), ledit capot (3) étant amovible pour des opérations de maintenance et/ou d'inspection, le au moins un panneau solaire (5) étant monté en correspondance avec la surface inclinée dudit capot de forme tronconique (3).

4. Station de dessalement (1) selon l'une quelconque des revendications précédentes 1 à 3, **caractérisée en ce qu'**elle comprend en outre une zone de mouvement (49) du au moins un panneau solaire photovoltaïque (5), ladite zone de mouvement (49) comprenant au moins un moteur (28) alimenté au moyen de l'énergie électrique générée par ledit au moins un panneau solaire photovoltaïque (5), ledit capot (3) comprenant des guides (29), ledit au moins un panneau solaire photovoltaïque (5) étant monté sur une structure de support mobile sur lesdits guides (29), le mouvement dudit au moins un panneau solaire photovoltaïque (5) étant commandé par ledit panneau de commande (42) par rapport à la hauteur et/ou l'azimut du soleil permettant d'obtenir un changement correspondant de l'inclinaison (62) et/ou un changement de l'orientation (63) dudit panneau solaire photovoltaïque (5).

5. Station de dessalement (1) selon la revendication précédente et la revendication 3, **caractérisée en ce que** ledit changement d'orientation (63) dudit panneau solaire photovoltaïque (5) par rapport à la position azimutale du soleil se produit au moyen de la rotation de ladite structure de support mobile sur lesdits guides (29) le long de la surface inclinée dudit capot de forme tronconique (3).

6. Station de dessalement (1) selon l'une quelconque des revendications précédentes 1 à 5, **caractérisée en ce qu'**elle comprend en outre un bloc de purification (55) pour le filtrage et/ou la désinfection supplémentaire(s) de l'eau obtenue par la condensation de ladite vapeur d'eau, permettant d'obtenir de l'eau potable.

7. Station de dessalement (1) selon l'une quelconque des revendications précédentes 1 à 6, **caractérisée en ce qu'**elle comprend en outre un contenant d'accumulation (20) de l'eau obtenue par la condensation de ladite vapeur d'eau, le remplissage dudit contenant d'accumulation (20) se produisant au moyen d'une pompe de tirage (14) fournie au moyen de l'énergie électrique générée par ledit au moins un panneau solaire photovoltaïque (5), ladite pompe de tirage (14) étant commandée par un deuxième capteur de niveau (40) et un troisième capteur de niveau (4), l'un d'entre eux contrôlant l'activation de ladite pompe de tirage (14) lorsque ledit second niveau d'eau (38) est supérieur à un seuil donné et l'autre contrôlant sa désactivation lorsque ladite pompe de tirage (14) a suffisamment abaissé ledit second niveau d'eau (38).

8. Station de dessalement (1) selon l'une quelconque des revendications précédentes 1 à 7, **caractérisée en ce qu'**elle comprend en outre une pompe d'alimentation (13) alimentée au moyen de l'énergie électrique générée par ledit au moins un panneau solaire photovoltaïque (5), ladite pompe d'alimentation (13) étant conçue pour contribuer au remplacement et/ou au remplissage de l'eau comprenant des solides dissous contenue dans ledit carter (1) par le tirage d'eau comprenant des solides dissous à partir d'une admission d'eau (18).

9. Station de dessalement (1) selon l'une quelconque des revendications précédentes 1 à 8, **caractérisée en ce qu'**elle comprend au moins une batterie (43) qui est rechargeable au moyen de l'énergie électrique fournie par ledit au moins un panneau solaire photovoltaïque (5), ladite batterie (43) fournissant l'énergie électrique nécessaire pour compenser les éventuelles pertes d'énergie électrique générées par le panneau solaire photovoltaïque (5) et/ou fournissant l'énergie électrique nécessaire pour le remplacement de nuit de l'eau comprenant des solides dissous.

10. Station de dessalement (1) selon l'une quelconque des revendications précédentes 1 à 9, **caractérisée en ce que** ledit contenant (4) et/ou ledit carter (2) comprend/comprennent une structure interne (30) et une structure externe (31) composées de matériaux composites entre lesquels un matériau isolant (32) est présent.

11. Station de dessalement (1) selon l'une quelconque des revendications précédentes 1 à 10, **caractérisée en ce que** ledit panneau solaire photovoltaïque (5) est combiné à un panneau thermique correspondant pour le chauffage de ladite eau comprenant des solides dissous.

12. Station de dessalement (1) selon l'une quelconque des revendications précédentes 1 à 11, **caractérisée en ce qu'**elle comprend des moyens capteur comprenant un capteur de température de capot (53) et/ou un capteur de température de contenant (54) et/ou un capteur de température de panneau et/ou un capteur d'exposition (57) et/ou des capteurs de mesure d'humidité et/ou des capteurs de niveau (39, 40, 41), l'activation des éventuelles pompes (13, 14, 15, 16, 17) et/ou des éventuels moteurs (28) étant commandée par ledit panneau de commande (42) en fonction des mesures réalisées au moyen desdits moyens capteur.
